# EUROPÄISCHE PATENTSCHRIFT

(11) **EP 0 772 923 B1**
(45) Veröffentlichungstag und Bekanntmachung des Hinweises auf die Patenterteilung: **02.12.1998**
(21) Anmeldenummer: 95915777.7
(22) Anmeldetag: 12.04.1995
(51) Int. Cl.: H04B 7/26

(54) **RICHTFUNKSYSTEM FÜR PUNKT-ZU-MEHRPUNKT VERBINDUNGEN**
RADIO LINK SYSTEM FOR POINT TO MULTI-POINT COMMUNICATION
SYSTEME DE RADIODIFFUSION PAR FAISCEAU DIRIGE, POUR COMMUNICATIONS ENTRE UN POINT ET PLUSIEURS POINTS

(30) Priorität: 23.07.1994 DE 4426183
(43) Veröffentlichungstag der Anmeldung: 14.05.1997
(73) Patentinhaber: ROBERT BOSCH GMBH, 70442 Stuttgart (DE)
(72) Erfinder: PETRY, Hans-Peter, D-71422 Sulzbach-Laufen (DE)
(86) Internationale Anmeldenummer: DE9500503
(87) Internationale Veröffentlichungsnummer: WO9603815

(56) Entgegenhaltungen:
- EP-A- 0 169 713
- EP-A- 0 568 291
- WO-A-92/15164
- WO-A-93/00751

## Beschreibung

Die vorliegende Erfindung betrifft ein Richtfunksystem für Punkt-zu-Mehrpunkt-Verbindungen, bei dem die für die Kommunikation zwischen einer Zentralstation und mehreren Teilnehmern zur Verfügung stehenden Frequenzkanäle bedarfsweise zuteilbar sind.

Ein solches Richtfunksystem ist im Mikrokwellen-Magazin, Vol. 10, No. 6, 1984, S. 629, 630 erwähnt. Bei Punkt-zu-Mehrpunkt-Richtfunkverbindungen läßt sich demnach die Frequenzbandausnutzung durch eine nur bedarfsweise Belegung des erforderlichen Freqenzbandes verbessern. Die Kommunikation zwischen der Zentralstation und den einzelnen Teilnehmern erfolgt entweder durch Vielfachzugriff im Frequenzmultiplex (FDMA) oder durch Vielfachzugriff im Zeitmultiplex (TDMA), wobei die Frequenzkanäle oder Zeitschlitze je nach Bedarf der Teilnehmer zugeteilt werden.

Aus EP 0 169 713 A3 ist ein Duplex-Übertragungssystem bekannt. Dabei erfolgt lediglich zwischen zwei Sende/Empfangs-Stationen eine Sprachübertragung entweder nur in eine Richtung (Simplex-Übertragung) oder in beide Richtungen (Duplex-Übertragung) gleichzeitig. Für eine Simplex-Übertragung wird ein Übertragungskanal zur Verfügung gestellt, der eine größere Bandbreite aufweist als jeder der zwei für eine Duplex-Übertragung bereitgestellten Übertragungskanäle. Dazu werden die Datenraten der übertragenen Signale an die Bandbreite der ihnen jeweils zugeordneten Übertragungskanäle angepaßt.

Bei einem aus der WO-A-93/00751 bekannten Datenübertragungssystem werden die Sendesignalpegel so geregelt, daß sich eine optimale Übertragungsqualität einstellt.

Der Erfindung liegt die Aufgabe zugrunde, ein Richtfunksystem der eingangs genannten Art anzugeben, dessen Übertragungskapazität möglichst flexibel an den Bedarf der Teilnehmer angepaßt werden kann.

Erfindungsgemäß wird diese Aufgabe durch die Merkmale des Anspruchs 1 gelöst. Vorteilhafte Weiterbildungen der Erfindung gehen aus den Unteransprüchen hervor.

Punkt-zu-Mehrpunkt Richtfunksysteme stellen eine kostengünstige und mit geringem Aufwand realisierbare Alternative zu leitergebundenen Übertragungssystemen dar. Dies gilt in besonderem Maße für neue Netzbetreiber im Rahmen des Aufbaus eigener Telekommunikationsinfrastruktur.

Ein nach der Erfindung ausgeführtes Punkt-zu-Mehrpunkt Richtfunksystem kann seine Übertragungsbandbreitenkapazität an verschiedene von den einzelnen Teilnehmern geforderte Datenübertragungsraten anpassen. Damit stellt ein solches System ein frequenzökonomisches, am Bedarf der einzelnen Teilnehmer orientiertes Übertragungsmedium dar.

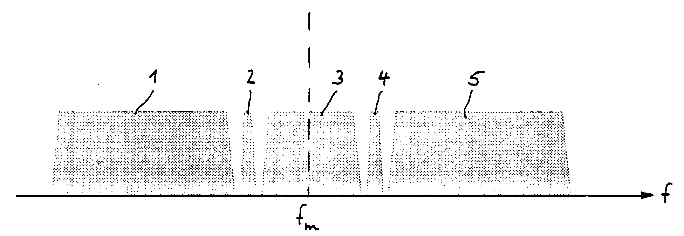

Anhand eines in der Zeichnung dargestellten Ausführungsbeispiels wird nun die Erfindung näher erläutert.

Die Figur zeigt ein Frequenzkanalraster.

Ein Punkt-zu-Mehrpunkt Richtfunksystem besteht aus einer Zentralstation mit einer in Azimutrichtung rundstrahlenden oder sektorisiert strahlenden Antenne und mehreren Teilnehmern, welche mit Richtantennen ausgestattet sind. Prinzipiell weisen die Zentralstation und die einzelnen Teilnehmer in bekannter Weise Hochfrequenz-Sende/Empfangs-Baugruppen, Umsetzer von der Hochfrequenz- in die Zwischenfrequenzebene und im Zwischenfrequenzbereich arbeitende Modulatoren und Demodulatoren auf.

Die Modulatoren und Demodulatoren in der Zentralstation sind so ausgelegt, daß ein Zwischenfrequenzträger mit einer variablen Datenrate, z.B. im Bereich von 64 KBit/s bis maximal 8 MBit/s, modulierbar bzw. demodulierbar ist. D.h. die Zentralstation kann - z.B. softwaregesteuert - jedem Teilnehmer einen Frequenzkanal zur Verfügung stellen, dessen Bandbreite an die vom jeweiligen Teilnehmer geforderte Datenübertragungsrate angepaßt ist. Das in der Zeichnung dargestellte Frequenzkanalraster enthält beispielhaft zwei Frequenzkanäle 1 und 5 für eine Datenrate von 2 MBit/s, zwei weitere Frequenzkanäle 2 und 4 für eine Datenrate von 64 KBit/s und einen Frequenzkanal 3 für eine Datenrate von 1 MBit/s. Die Lage der einzelnen Kanäle relativ zu der Mittenfrequenz fₘ des Übertragungsbandes wird zweckmäßigerweise so organisiert, daß die Kanäle symmetrisch um die Mittenfrequenz fₘ herum verteilt sind (vgl. Figur). Die maximal mögliche Anzahl der den Teilnehmern zugeordneten Kanäle ist durch die Kanalrasterung, den zulässigen spektralen Abstand und die kanalindividuelle Datenrate bestimmt.

In der Zentralstation können die von den Teilnehmern geforderten Kanalbandbreiten registriert werden, damit für jeden Teilnehmer eine von der Übertragungsbandbreite abhängige Tarifierung möglich ist.

Modulatoren und Demodulatoren können auch für verschiedene Modulationsarten (z.B. n - PSK, n - QPSK mit n = 1 ... 8 oder M - QAM mit M = 4 ... 256) ausgelegt werden, so daß Datenübertragungen mit teilnehmerindividuell unterschiedlichen Modulationen möglich sind.

Um entfernungsabhängige Empfangspegelunterschiede ausgleichen zu können, ist in der Zentralstation eine entsprechende Verstärkungsregelung für die Sendesignale vorgesehen.

## Patentansprüche

1. Richtfunksystem für Punkt-zu-Mehrpunkt Verbindungen, bei dem die für die Kommunikation zwischen einer Zentralstation und mehreren Teilnehmern zur Verfügung stehenden Frequenzkanäle bedarfsweise zuteilbar sind, dadurch gekennzeichnet, daß die Bandbreite der einzelnen Frequenzkanäle (1 ... 5) auf die von den einzelnen Teilnehmern jeweils geforderte Datenübertragungsrate einstellbar ist.

2. Richtfunksystem nach Anspruch 1, dadurch gekennzeichnet, daß die Verstärkung der Sendesignale regelbar ist, so daß entfernungsabhängige Unterschiede der Empfangssignalpegel ausgeglichen werden können.

3. Richtfunksystem nach Anspruch 1, dadurch gekennzeichnet, daß Modulatoren und Demodulatoren auf verschiedene Modulationsarten einstellbar sind.

4. Richtfunksystem nach Anspruch 1, dadurch gekennzeichnet, daß die Zentralstation für die einzelnen Teilnehmer eine von der Übertragungsbandbreite abhängige Tarifierung vornimmt.

## Claims

1. Microwave system for point-to-multipoint links, in which the frequency channels which are available for communication between a central station and a plurality of subscribers can be assigned according to requirements, characterized in that the bandwidth of the individual frequency channels (1 ... 5) can be adjusted to the data transmission rate respectively required by the individual subscribers.

2. Microwave system according to Claim 1, characterized in that the amplification of the transmission signals can be regulated, so that distance-dependent differences in the reception signal levels can be compensated.

3. Microwave system according to Claim 1, characterized in that modulators and demodulators can be adjusted to different types of modulation.

4. Microwave system according to Claim 1, characterized in that the central station performs tariff metering for the individual subscribers as a function of the transmission bandwidth.

## Revendications

1. Système de radiodiffusion par faisceau dirigé entre un point et plusieurs points, selon lequel les canaux de fréquence disponibles pour la communication entre une station centrale et plusieurs abonnés peuvent être attribués à la demande,
caractérisé en ce que
la largeur de bande des différents canaux de fréquence (1 ... 5) se règle sur le débit de données de transmission demandé par chacun des abonnés.

2. Système de radiodiffusion par faisceau dirigé selon la revendication 1,
caractérisé en ce que
l'amplification des signaux d'émission est réglable pour permettre de compenser des différences de niveau de signal de réception dépendant de l'éloignement.

3. Système de radiodiffusion par faisceau dirigé selon la revendication 1,
caractérisé en ce que
les modulateurs et démodulateurs peuvent être réglés sur différents types de modulation.

4. Système de radiodiffusion par faisceau dirigé selon la revendication 1,
caractérisé en ce que
la station centrale réalise une tarification dépendant de la largeur de la bande de transmission de chaque abonné.
